# EUROPEAN PATENT SPECIFICATION

(11) **EP 2 703 955 B1**
(45) Date of publication and mention of the grant of the patent: **26.11.2014**
(21) Application number: 12182610.1
(22) Date of filing: 31.08.2012
(51) Int. Cl.: G06F 3/023, G06F 17/27

(54) **Scoring predictions based on prediction length and typing speed**
Bewertung von Vorhersageergebnissen basierend auf Vorhersagelänge und Eintippgeschwindigkeit
Evaluation de prédictions basée sur la longueur de prédiction et la vitesse de frappe

(43) Date of publication of application: 05.03.2014
(73) Proprietor: BlackBerry Limited, Waterloo, ON N2K 0A7 (CA)
(72) Inventor: Pasquero, Jerome, Montreal, Québec H2Y 2P5 (CA); Griffin, Jason Tyler, Waterloo, Ontario N2L 3W8 (CA); McKenzie, Donald, Somerset, McCulloch, Waterloo, Ontario N2L 3W8 (CA)
(74) Representative: Moore, Barry

(56) References cited:
- EP-A1- 2 282 252
- US-A1- 2008 100 581
- US-A1- 2009 174 667
- US-A1- 2011 179 355
- US-A1- 2012 159 317
- US-A1- 2012 167 009

## Description

### FIELD

Example embodiments disclosed herein relate generally to input methodologies for electronic devices, such as handheld electronic devices.

### BACKGROUND

Increasingly, electronic devices, such as computers, netbooks, cellular phones, smart phones, personal digital assistants, tablets, etc., have touchscreens that allow a user to input characters into an application, such as a word processor or email application. Character input on touchscreens can be a cumbersome task due to, for example, the small touchscreen area, particularly where a user needs to input a long message.

US 2008/100581 relates to a handheld electronic device, which includes a reduced QWERTY keyboard and is enabled with disambiguation software. The device provides output in the form of a default output and a number of variants. The output is based largely upon the frequency, i.e., the likelihood that a user is likely to have intended a particular output, but various features of the device provide additional variants that are not based solely on frequency and rather are provided by various logic structures resident on the device. E.g. typing speed is used.

US 2009/174667 relates to a portable electronic device having a touch screen display performs a set of operations, including displaying a plurality of key icons, each having an adjustable size hit region, and receiving a sequence of individual touch points input by a user on the touch screen display. The operations performed by the device further include processing the received individual touch points by: forming a user-input directed graph for the sequence of individual touch points received so far, determining a character corresponding to a last received individual touch point in accordance with the adjustable hit regions of the displayed key icons, displaying a sequence of characters corresponding to the sequence of individual touch points, and updating sizes of the adjustable hit regions for a plurality of the key icons in accordance with the sequence of individual touch points input by the user. String prediction may be based on a length difference with the actual input.

US 2012/167009 relates to techniques to automatically correct or complete text. A string and keystroke timing information associated with entry of the string, for example via an input device such as a keyboard, are received. A word to suggest as a correction or completion of the string is determined based at least in part on the keystroke timing information.

### BRIEF DESCRIPTION OF THE DRAWINGS

**Fig. 1** is an example block diagram of an electronic device, consistent with embodiments disclosed herein.
**Fig. 2** is a flowchart illustrating an example method for generating predicted strings based on an input, assigning scores to the predicted strings, and displaying the predicted strings based on the assigned scores, consistent with embodiments disclosed herein.
**Fig. 3** shows an example front view of a touchscreen, consistent with embodiments disclosed herein.

### DETAILED DESCRIPTION

Reference will now be made in detail to various embodiments, examples of which are illustrated in the accompanying drawings. Wherever possible, the same reference numbers will be used throughout the drawings to refer to the same or like parts.

The present disclosure relates to an electronic device, such as a wired communication device (for example, a laptop computer having a touchscreen) or a mobile/handheld wireless communication device such as a cellular phone, smartphone, wireless organizer, personal digital assistant, wirelessly enabled notebook computer, tablet, or a similar device. The electronic device can also be an electronic device without wireless communication capabilities, such as a handheld electronic game device, digital photograph album, digital camera, or other device.

Predictive text input solutions have been introduced for assisting with input on an electronic device. These solutions include predicting which word a user is entering and offering a suggestion for completing and/or correcting the word.

Throughout this application, the terms "string" and "string of characters" are used interchangeably. Use of the indefinite article "a" or "an" in the specification and the claims is meant to include one or more features that it introduces, unless otherwise indicated. Thus, the term "a predicted string of characters" as used, for example, in "generating a predicted string of characters" can include the generation of one or more predicted strings of characters. Similarly, use of the definite article "the", or "said", particularly after a feature has been introduced with the indefinite article, is meant to include one or more features to which it refers (unless otherwise indicated).

The invention is defined by the claims.

A method is provided that receives an input, determines, by the processor, a likelihood that a predicted string associated with the received input matches an intended input string, where the determination is a function of a length of the predicted string and a typing speed associated with the received input, and displaying the predicted string. The predicted string is, for example, the product of a prediction algorithm. This and other embodiments described below provide the user with better predictions of the intended input. Better predictions can improve text input speed, reduce processing cycles and, in some instance, save power.

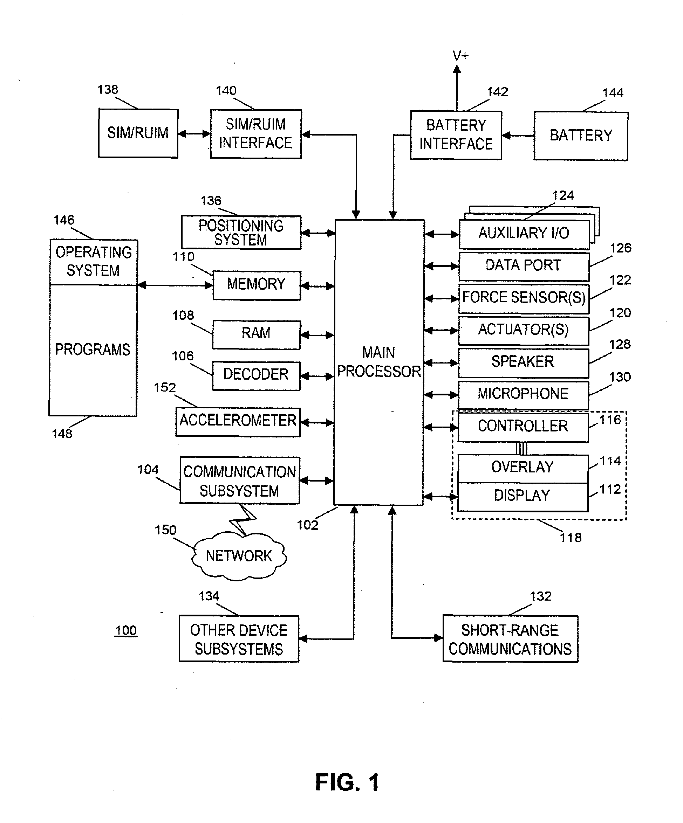

**Fig. 1** is a block diagram of an electronic device 100, consistent with example embodiments disclosed herein. Electronic device 100 includes multiple components, such as a main processor 102 that controls the overall operation of electronic device 100. Communication functions, including data and voice communications, are performed through a communication subsystem 104. Data received by electronic device 100 is decompressed and decrypted by a decoder 106. The communication subsystem 104 receives messages from and sends messages to a network 150. Network 150 can be any type of network, including, but not limited to, a wired network, a data wireless network, voice wireless network, and dual-mode wireless networks that support both voice and data communications over the same physical base stations. Electronic device 100 can be a battery-powered device and include a battery interface 142 for receiving one or more batteries 144.

Main processor 102 is coupled to and can interact with additional subsystems such as a Random Access Memory (RAM) 108; a memory 110, such as a hard drive, CD, DVD, flash memory, or a similar storage device; one or more actuators 120; one or more force sensors 122; an auxiliary input/output (I/O) subsystem 124; a data port 126; a speaker 128; a microphone 130; short-range communications 132; an accelerometer 152; other device subsystems 134; and a touchscreen 118.

Device 100 includes a man-machine interface, for example, touchscreen 118, which includes a display 112 with a touch-active overlay 114 connected to a controller 116. User-interaction with a graphical user interface (GUI), such as a virtual keyboard rendered on the display 112 as a GUI for input of characters, or a web-browser, is performed through touch-active overlay 114. Main processor 102 interacts with touch-active overlay 114 via controller 116. Characters, such as text, symbols, images, and other items are displayed on display 112 of touchscreen 118 via main processor 102. Characters are inputted when the user touches the touchscreen at a location associated with said character.

Touchscreen 118 is connected to and controlled by main processor 102. Accordingly, detection of a touch event and/or determining the location of the touch event can be performed by main processor 102 of electronic device 100. A touch event includes, in some embodiments, a tap by a finger, a swipe by a finger, a swipe by a stylus, a long press by finger or stylus, a press by a finger for a predetermined period of time, and the like.

While specific embodiments of a touchscreen have been described, any suitable type of touchscreen for an electronic device can be used, including, but not limited to, a capacitive touchscreen, a resistive touchscreen, a surface acoustic wave (SAW) touchscreen, an embedded photo cell touchscreen, an infrared (IR) touchscreen, a strain gauge-based touchscreen, an optical imaging touchscreen, a dispersive signal technology touchscreen, an acoustic pulse recognition touchscreen or a frustrated total internal reflection touchscreen. The type of touchscreen technology used in any given embodiment will depend on the electronic device and its particular application and demands.

When the user touches touchscreen 118, touchscreen 118 can register a two-dimensional imprint of the touch. Touchscreen 118 can analyze the imprint and provide to main processor 102 the (X,Y) coordinates of the center of the touch, the geometrical characteristics of the touch, the pressure applied by the touch, and so forth. The geometrical characteristics include, for example, parameters defining the geometrical shape (e.g., circle, ellipse, square) approximating the touch area.

Main processor 102 can also interact with a positioning system 136 for determining the location of electronic device 100. The location can be determined in any number of ways, such as by a computer, by a Global Positioning System (GPS), either included or not included in electric device 100, through a Wi-Fi network, or by having a location entered manually. The location can also be determined based on calendar entries.

In some embodiments, to identify a subscriber for network access, electronic device 100 uses a Subscriber Identity Module or a Removable User Identity Module (SIM/RUIM) card 138 inserted into a SIM/RUIM interface 140 for communication with a network, such as network 150. Alternatively, user identification information can be programmed into memory 110.

Electronic device 100 also includes an operating system 146 and programs 148 that are executed by main processor 102 and that are typically stored in memory 110. Additional applications may be loaded onto electronic device 100 through network 150, auxiliary I/O subsystem 124, data port 126, short-range communications subsystem 132, or any other suitable subsystem.

A received signal such as a text message, an e-mail message, or web page download is processed by communication subsystem 104 and this processed information is then provided to main processor 102. Main processor 102 processes the received signal for output to display 112, to auxiliary I/O subsystem 124, or a combination of both. A user can compose data items, for example e-mail messages, which can be transmitted over network 150 through communication subsystem 104. For voice communications, the overall operation of electronic device 100 is similar. Speaker 128 outputs audible information converted from electrical signals, and microphone 130 converts audible information into electrical signals for processing.

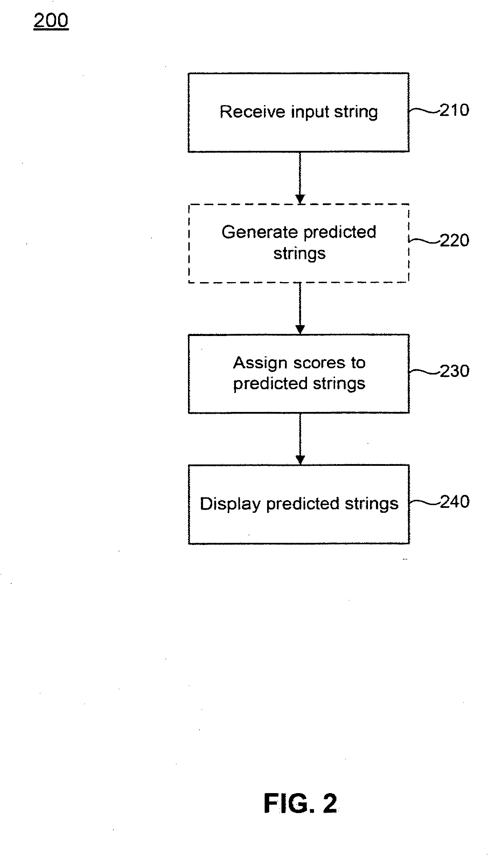

**Fig. 2** is a flowchart illustrating an example method 200 for receiving an input, optionally generating a predicted string based on the input, determining a likelihood that a predicted string associated with the received input matches an intended string, and displaying the predicted string, consistent with example embodiments disclosed herein. As used herein, a predictor (such as a predictive algorithm, program, firmware, or a dedicated hardware module) includes a set of instructions that when executed by a processor (e.g., main processor 102), can be used to disambiguate received ambiguous text input and provide various predicted strings (for example, words or phrases, acronyms, names, slang, colloquialisms, abbreviations, or any combination thereof) based on the input. A predictor can also receive otherwise unambiguous text input and generate predicted strings potentially contemplated by the user based on several factors, such as context, frequency of use, and others as appreciated by those skilled in the field.

In an example embodiment, the predictor is one of the programs 148 residing in memory 110 of electronic device 100. Accordingly, method 200 includes a predictor for generating predicted strings corresponding to the input string of characters. It can be appreciated that while the example embodiments described herein are directed to a predictor program executed by a processor, the predictor can be executed, for example, by a virtual keyboard controller.

Method 200 begins at block 210, where the processor (e.g., main processor 102) receives an input string of one or more characters (hereinafter, "input string") from a virtual keyboard displayed on touchscreen 118. As used herein, a character can be any alphanumeric character, such as a letter, a number, a symbol, a punctuation mark, a space, and the like.

At block 220, the processor optionally generates one or more predicted strings such as words or phrases, acronyms, names, slang, colloquialisms, abbreviations, or any combination thereof based on the input string received in block 210. The predicted strings include, for example, strings that are stored in a dictionary of a memory of the electronic device (for example, words or acronyms), strings that were previously inputted by the user (for example, names or acronyms), strings based on a hierarchy or tree structure, a combination thereof, or any strings selected by a processor based on defined arrangement.

In some embodiments, the processor uses contextual data for generating a predicted string. Contextual data considers the context in which the input string is entered. Contextual data can include, for example, information about strings previously inputted by the user, grammatical attributes of the input string (for example, whether a noun or a verb is needed as the next string in a sentence), or any combination thereof. For example, if the string "the" has already been inputted into display, the processor can use the contextual data to determine that a noun or an adjective - instead of a verb - will be the next string after "the". Likewise, if the string "Guy Lafleur played in the National Hockey" was inputted, based on the context, the processor can determine the subsequent string is likely to be "League". Using the contextual data, the processor can also determine whether one or more characters in the input string are incorrect. For example, the processor can determine that the inputted character was supposed to be a "w" instead of an "a", given the proximity of these characters on a QWERTY virtual keyboard. Any known predictive technique or software can be used to process the input string and the contextual data in generating the predicted strings at block 220.

In some embodiments, a predicted string generated at block 220 begins with the input string; in other words, the input string can constitute a prefix (a substring) of the predicted string. For example, if the characters "pl" are received as the input string from a virtual keyboard, the predicted strings generated at block 220 can begin with "pl", and can include "please", "plot", and "place". Similarly, if the user enters the input string "child", the predicted strings generated at block 220 can include "children" and "childish".

In some example embodiments, the processor generates at block 220 predicted strings to which the input string is not a prefix. For example, if the user inputs the string "id", the processor can generate a predicted string "I'd", even though "id" is not a substring of "I'd". As another example, the processor can generate a predicted string "receive" for the input string "reci" (in case the user makes a spelling mistake or a typo). Because the input string does not have to be an exact substring of the predicted string, the user is allowed to make spelling or typing mistakes, use abbreviations, disregard the letter case, and so forth. Thus, the user can significantly increase the typing speed without sacrificing accuracy, by relying on the electronic device to automatically complete the input and correct it, if needed.

In some example embodiments, the predicted strings are not generated by the main processor 102. In these embodiments, main processor 102 provides the input string, for example, to a prediction processor (not shown), which generates predicted strings based on the provided input string, and sends the predicted strings to main processor 102. The prediction processor can be a software- or hardware-based module communicatively coupled to main processor 102. The prediction processor can be either local or remote to electronic device 100.

At block 230, the processor assigns scores (e.g., values) for the predicted strings generated at block 220. A score assigned to a predicted string reflects, for example, a likelihood (probability) that the user intends to input that predicted string, that is, the likelihood that the predicted string is the intended input, given the already inputted input string. A high score can indicate high likelihood, and vice versa, a low score can indicate lower likelihood. In some embodiments, the processor can assign ranks instead of scores. In those embodiments, a lower rank value can indicate a higher rank, that is, a higher likelihood that the predicted string is the input intended by the user.

At block 240, the processor displays one or more of the predicted strings on display 112. The displayed strings can be displayed at or near the input field, on the virtual keyboard (for example, on or near the <space> key or on keys corresponding to characters predicted as the next characters the user might input) or at any other suitable display location. In some embodiments, the processor limits the number of predicted strings that are displayed. For example, the processor can choose to display only a predetermined number (e.g., 1, 3, 10, etc.) of predicted strings that were assigned the highest scores. In embodiments where the processor assigns ranks instead of scores, the processor can choose to display only a predetermined number of highest-ranked predicted strings (e.g., predicted strings with lowest rank values).

### Score as a function of a typing speed and predicted string length

In the invention, the score assigned to the predicted string at block 230 is determined based on the typing speed of the user inputting the string and on the length of the predicted string. For example, if the processor determines that the user is typing fast, the processor can assign a higher score to the longer predicted strings and/or assign a lower score to the shorter predicted strings. Assigning a higher score to a predicted string makes the string more likely to be displayed by the processor at step 240.

When the user is typing fast, displaying a short predicted string may provide little or no benefit to the user, because it may take the user a significant time (e.g., 0.5 seconds) to notice the displayed string, to decide whether or not the displayed string is the intended input, and to select it if it is. Thus, if the user is typing fast (e.g., 4 characters per second), displaying a predicted string that is, for example, only two characters longer than the already typed input string, may not save the user any time. Even if the displayed predicted string is the one contemplated by the user, in the 0.5 seconds that would take the user to notice and select it, the user could simply type in the remaining two characters.

For example, if the user is typing fast and has typed the characters "id", the processor can generate predicted strings "I'd", "idea" and "identify". If the processor did not take typing speed and string length into account, the processor could assign the highest score to "I'd" or to "idea", for example, because these strings are more frequently used than "identify". However, if the user is typing fast, and the processor considers the typing speed and the length of the predicted strings, the processor can assign the highest score to "identify", because it is the only prediction string long enough to potentially save the user some time, as explained above.

In some embodiments, longer predicted strings are assigned higher scores when the typing speed increases, and lower scores when the typing speed decreases. Conversely, shorter predicted strings can be assigned higher scores when the typing speed decreases, and lower scores when the typing speed increases.

In some embodiments, the scores are determined based on the length of the input string. For example, the score can be a function of the typing speed and of the difference between the length of the predicted string and the length of the input string.

In some embodiments, the score depends on the number of character corrections that would be required to change the input string into the predicted string. For example, if the user typed "id" intending to type "I'd", it could take the user as many as five corrections - deleting "d" and "i", and inputting a capital "I", "'", and "d" - to arrive at the intended input.

In some embodiments, the score determination includes thresholds such as a length threshold and/or a speed threshold. For example, the processor can decrease the scores of predicted strings that are not longer than the input string by at least a certain length threshold. In some embodiments, such predicted strings can be assigned a predetermined score that would indicate to the processor not to display those strings.

In some embodiments, if the predicted strings are longer than the input string by at least the length threshold, the scores of such strings will not take into account the absolute length of the predicted string. In other words, in these embodiments, the score does not depend on the length of the predicted string as long as the predicted string is longer than the input string by the length threshold.

In some embodiments, the length threshold is a predetermined value, such as 0, 1, 3, etc. In other embodiments, the length threshold is a function of the typing speed. For example, the length threshold can be in direct relationship with the typing speed, that is, the length threshold increases when the typing speed increases, and the length threshold decreases when the typing speed decreases. For example, the threshold can reflect the number of characters that the user, maintaining the same typing speed, would type within a "reaction" time period. The reaction time period is, for example, the time period that would take an average user to notice the displayed predicted string, read it, decide whether or not it is the intended string, and select it if it is. In some embodiments, the reaction time period is a predetermined time period, such as 0.3 seconds, 0.5 seconds, 1 second, etc. In other embodiments, the reaction time period can be determined dynamically, for example, by checking how long it took the user to react to one or more previously displayed predicted strings.

In some embodiments, the score also depends on a predetermined speed threshold. For example, the score can be independent from the length of the predicted string if the typing speed is below the predetermined speed threshold. In other words, when the user is typing very slowly, the score may not take the length of the predicted strings into account at all.

The typing speed can be defined and measured by the processor using any suitable means. In some embodiments, the typing speed is defined, for example, as the average or median speed (e.g., in characters per second) over the last O inputted characters, last P words, last Q seconds, or any combination thereof, where O, P, and Q can be different predetermined numbers. In some embodiments, the typing speed is determined by combining the short-term speed (the speed with which the last several characters were typed) with the long-term speed (for example, the average speed across the entire input text).

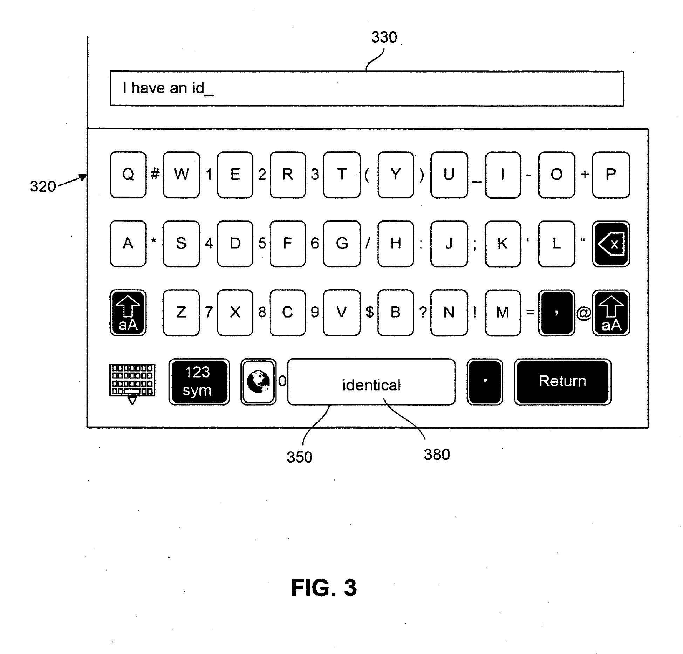

**Fig. 3** illustrates an example front view of touchscreen 118 having a virtual keyboard 320, consistent with example embodiments disclosed herein. The position of the virtual keyboard 320 is variable such that virtual keyboard 320 can be placed at any location on touchscreen 118. Touchscreen 118 includes two areas: (1) an input field 330 that displays characters inputted by the user and (2) the virtual keyboard 320 that receives the input from the user. As shown in **Fig. 3****,** touchscreen 118 displays a virtual keyboard 320 having a standard QWERTY layout; however, any keyboard layout can be displayed for use in the device, such as AZERTY, QWERTZ, or a layout based on the International Telecommunication Union (ITU) standard (ITU E.161) having "ABC" on key 2, "DEF" on key 3, and so on. Virtual keyboard 320 includes a space key 350 as well as other keys that can provide different inputs, such as punctuation, letters, numbers, enter or return keys, and function keys.

As shown in **Fig. 3****,** the user has already inputted the text "I have an id" which appears at input field 330. The processor receives (210) the input string "id", and generates (220) predicted strings based on the input string. For example, the processor generates the following predicted strings: "ID", "I'd", "idea", "identify", "identical", "ideological". The processor then assigns (230) scores to the two predicted strings.

The processor can first assign scores based on factors other than typing speed and string lengths. For example, the processor assigns scores based on the contextual data, N-gram data, and geolocation data, as described above, and assigns the following scores, first:

| **Predicted String** | **Score** |
|---|---|
| idea | 0.65 |
| ID | 0.4 |
| identical | 0.35 |
| ideological | 0.28 |
| I'd | 0.1 |
| identify | 0.1 |

The scores can, but do not have to, be normalized so that the sum of all the scores equals 1, in which case each score can represent a probability that the corresponding predicted string is the one intended by the user. In the above example, "I'd" and "identify" are assigned very low scores, for example, because the processor predicts that after entering an article "an" the user is inputting either a noun or an adjective.

The processor then considers the typing speed and the length of each prediction string, and adjusts the scores accordingly. Assuming, for example, that the user is typing at a speed of 4 characters per second, and that a predetermined reaction time period is 0.5 seconds, the processor can determine the length threshold to be 4x0.5=2 (indicating that at the current typing speed the user can type 2 characters within the reaction time period). Next, the processor can determine the difference in length between each predicted string and the input string "id". In this example, the length differences would be: idea(2), ID(0), identical(7), ideological(9), I'd(1), and identify(6). Consequently, processor can decrease the scores of all prediction strings whose length difference is not above the length threshold ("idea", "ID" and "I'd"), for example, by 2. The resulting scores would then become:

| **Predicted String** | **Score** |
|---|---|
| idea | 0.65 / 2 = 0.325 |
| ID | 0.4 / 2 = 0.2 |
| identical | 0.35 |
| ideological | 0.28 |
| I'd | 0.1 / 2 = 0.05 |
| identify | 0.1 |

In some embodiments, scores of short predicted strings can be decreased by a predetermined percentage, by a predetermined value, or set at a predetermined value indicating to the processor that the strings should not be displayed at all.

The processor can then either increase the scores of the remaining (longer) predicted strings in accordance with their length, or keep their scores unchanged. In the above example, they are unchanged, and the predicted string "identical" emerges as the predicted string with the highest score.

The processor displays (240) one or more predicted strings on touchscreen 118. In this example, the processor is configured to display only the predicted string that was assigned the highest score. Therefore, the predicted string "identical" 380 is displayed on space key 350. The user can then input (select) the predicted string, for example, by pressing the space key 350. When the user inputs the predicted string, the processor can, for example, replace the input string "id" with the inputted predicted string "identical" at input field 330.

The processes and logic flows described in this specification can be performed by one or more programmable processors executing one or more computer programs to perform functions by operating on input data and generating output. The processes and logic flows can also be performed by, and apparatus can also be implemented as, special purpose logic circuitry, e.g., an FPGA (field programmable gate array) or an ASIC (application specific integrated circuit).

It is intended that the specification and examples be considered as examples only, with a true scope of the invention being indicated by the following claims.

## Claims

1. An input method (200) for a communication device (100) having a processor (102), the method comprising:
receiving (210) a typed input string;
determining, by the processor, a likelihood that a predicted string associated with the received input string matches an intended input string, wherein the determination is a function of a length of the predicted string and a typing speed associated with the received input string;
assigning (230), to the predicted string, a score associated with the determined likelihood;
decreasing the score if the difference between the length of the predicted string and the length of the input string is smaller than a length threshold;
determining whether to display the predicted string based at least on the score; and
upon the determination to display the predicted string, displaying (240) the predicted string.

2. The method of claim 1, wherein the length threshold is a function of a predetermined time period.

3. The method of claim 1, wherein the length threshold is a function of the typing speed.

4. The method of claim 1, wherein the length threshold is in direct relationship with the typing speed.

5. The method of claim 1, further comprising determining the typing speed by calculating an average typing speed across a predetermined number of input characters.

6. The method of claim 1, wherein the score is independent of the length of the predicted string if the typing speed is below a predetermined speed threshold.

7. An electronic device (100) comprising a display (112) and a processor (102), the processor configured to perform the method as claimed in any one of claims 1 to **6.**

## Patentansprüche

1. Ein Eingabeverfahren (200) für eine Kommunikationsvorrichtung (100) mit einem Prozessor (102), wobei das Verfahren umfasst:
Erhalten (210) einer eingegebenen Eingabezeichenkette;
Bestimmen, durch einen Prozessor, einer Wahrscheinlichkeit, dass eine vorhergesagte Zeichenkette, die mit der erhaltenen Eingabezeichenkette assoziiert ist mit einer beabsichtigten Eingabezeichenkette übereinstimmt, wobei die Bestimmung eine Funktion von einer Länge der vorhergesagten Zeichenkette und einer Eingabegeschwindigkeit ist, die mit der erhaltenen Eingabezeichenkette assoziiert ist;
Zuordnen (230) einer Bewertung zu der vorhergesagten Zeichenkette, die mit der bestimmten Wahrscheinlichkeit assoziiert ist;
Vermindern der Bewertung, wenn der Unterschied zwischen der Länge der vorhergesagten Zeichenkette und der Länge der Eingabezeichenkette kleiner ist als ein Längenschwellenwert;
Bestimmen, ob die vorhergesagte Zeichenkette basierend auf zumindest der Bewertung angezeigt werden soll; und
bei der Bestimmung, dass die vorhergesagte Zeichenkette angezeigt werden soll, Anzeigen (240) der vorhergesagten Zeichenkette.

2. Das Verfahren nach Anspruch 1, wobei der Längenschwellwert eine Funktion einer vorbestimmten Zeitdauer ist.

3. Das Verfahren nach Anspruch 1, wobei der Längenschwellwert eine Funktion der Eingabegeschwindigkeit ist.

4. Das Verfahren nach Anspruch 1, wobei der Längenschwellwert in direkter Beziehung zur Eingabegeschwindigkeit steht.

5. Das Verfahren nach Anspruch 1, ferner umfassend ein Bestimmen der Eingabegeschwindigkeit durch Berechnen einer durchschnittlichen Eingabegeschwindigkeit für eine vorbestimmte Anzahl von Eingabezeichen.

6. Das Verfahren nach Anspruch 1, wobei die Bewertung unabhängig von der Länge der vorhergesagten Zeichenkette ist, wenn die Eingabegeschwindigkeit unterhalb eines vorbestimmten Geschwindigkeitsschwellenwerts ist.

7. Eine elektronische Vorrichtung (100), die eine Anzeige (112) und einen Prozessor (102) umfasst, wobei der Prozessor konfiguriert ist, um das Verfahren, wie beansprucht, nach einem der Ansprüche 1 bis 6 durchzuführen.

## Revendications

1. Procédé d'entrée (200) pour un dispositif de communication (100) ayant un processeur (102), le procédé comprenant le fait :
de recevoir (210) une chaîne d'entrée tapée ;
de déterminer, par le processeur, une probabilité qu'une chaîne prédite associée à la chaîne d'entrée reçue corresponde à une chaîne d'entrée prévue, la détermination étant fonction d'une longueur de la chaîne prédite et d'une vitesse de frappe associée à la chaîne d'entrée reçue ;
d'attribuer (230), à la chaîne prédite, un score associé à la probabilité déterminée ;
de réduire le score si la différence entre la longueur de la chaîne prédite et la longueur de la chaîne d'entrée est inférieure à une longueur seuil ;
de déterminer s'il faut afficher la chaîne prédite sur la base d'au moins le score ; et
lors de la détermination de l'affichage de la chaîne prédite, d'afficher (240) la chaîne prédite.

2. Procédé de la revendication 1, dans lequel le seuil de longueur est fonction d'une durée prédéterminée.

3. Procédé de la revendication 1, dans lequel le seuil de longueur est fonction de la vitesse de frappe.

4. Procédé de la revendication 1, dans lequel le seuil de longueur est en relation directe avec la vitesse de frappe.

5. Procédé de la revendication 1, comprenant en outre la détermination de la vitesse de frappe par le calcul d'une moyenne de vitesse de frappe à travers un nombre prédéterminé de caractères d'entrée.

6. Procédé de la revendication 1, dans lequel le score est indépendant de la longueur de la chaîne prédite si la vitesse de frappe est inférieure à un seuil de vitesse prédéterminé.

7. Dispositif électronique (100) comprenant un écran d'affichage (112) et un processeur (102), le processeur étant configuré pour réaliser le procédé tel que revendiqué dans l'une quelconque des revendications 1 à 6.
